# EUROPÄISCHE PATENTSCHRIFT

(11) **EP 3 811 839 B1**
(45) Veröffentlichungstag und Bekanntmachung des Hinweises auf die Patenterteilung: **31.05.2023**
(21) Anmeldenummer: 20203427.8
(22) Anmeldetag: 22.10.2020
(51) Int. Cl.: A47L 13/16

(54) **TROCKEN- UND/ODER REINIGUNGSTUCH**
DRYING AND / OR CLEANING CLOTH
CHIFFON POUR SÉCHER ET/OU NETTOYER

(30) Priorität: 23.10.2019 DE 202019105895 U
(43) Veröffentlichungstag der Anmeldung: 28.04.2021
(73) Patentinhaber: FUTURINVEST GmbH, 41564 Kaarst (DE)
(72) Erfinder: FRITSCH, Jens, 5332 Bornheim (DE)
(74) Vertreter: Dr. Stark & Partner Patentanwälte mbB

(56) Entgegenhaltungen:
- EP-A1- 1 201 176
- JP-A- 2002 159 427
- JP-A- 2019 017 877
- US-A1- 2018 360 289

## Beschreibung

Die Erfindung betrifft ein Trocken- und/oder Reinigungstuch mit einer viereckigen Fläche mit zwei Seiten, die durch zwei Längskanten und zwei Querkanten jeweils begrenzt sind.

Aus der Praxis sind derartige Trocken- und/oder Reinigungstücher bekannt, die unter anderem zum Trocknen von Fahrzeugen nach der Fahrzeugwäsche oder aber zum Aufnehmen von Poliermittelrückständen verwendet werden.

Aus der EP 1 201 176 A1 ist ein Einweg-Wischtuch für einen Bodenwischer bekannt, bei dem im Seitenbereich jeweils kleine Schlitze für die Befestigung mittels Clips am Bodenwischer vorgesehen sind.

Die JP 2019 017877 A beschreibt ist ein Reinigungstuch mit mehreren Schlitzen zum Durchstecken der Finger, wobei die Schlitze bogenförmig oder S-förmig ausgebildet sind und eine auf den Finger-Durchmesser abgestimmte geringe Länge haben.

In der US 2018/360289 A1 ist ein beutelförmiger doppellagiger Lappen gezeigt, der an vier Seiten verschlossen ist und einen Schlitz zum Hineingreifen in den Beutel aufweist.

Aus der JP 2002 159427 A ist ein beutelförmiger doppellagiger Lappen bekannt, der an drei Seiten verschlossen ist und in den die Hand bzw. ein Halter eingeführt werden kann. Weiterhin ist eine durch zwei parallele Schlitze gebildete Lasche vorgesehen, welche mit drei Fingern gehalten werden kann.

Auch werden derartige Trocken- und/oder Reinigungstücher zum Putzen im Haushalt oder aber zum Abtrocknen von Haustieren eingesetzt.

Nachteilig hierbei ist, dass es bei den vorbeschriebenen Tätigkeiten dazu kommen kann, dass das Trocken- und/oder Reinigungstuch versehentlich herunterfällt und somit mit dem Boden in Kontakt kommt. Hierdurch kann Schmutz an das Tuch gelangen, der dann bei der weiteren Verwendung beispielsweise das Fahrzeug nicht nur (erneut) verunreinigen kann, sondern durch harte Bestandteile wie Sandkörner, Steinchen etc. können auch Kratzer oder andere Beschädigungen am Fahrzeug verursacht werden. Gleiches gilt sinngemäß auch bei der Verwendung im Haushalt und ähnlich auch bei der Benutzung zum Trocknen von Haustieren, die ebenfalls in Mitleidenschaft gezogen werden können.

Aufgabe der Erfindung ist es, die vorgenannten Nachteile zu vermeiden und ein Trocken- und/oder Reinigungstuch anzugeben, mit dem das Risiko von Beeinträchtigungen aufgrund versehentlichem Fallenlassens des Trocken- und/oder Reinigungstuchs sicher vermieden wird.

Diese Aufgabe wird bei einem gattungsgemäßen Trocken- und/oder Reinigungstuch dadurch gelöst, dass das Trocken- und/oder Reinigungstuch im Bereich von zumindest einer Querkante bzw. einer Längskante eine Öffnung zum Hindurchgreifen aufweist. Hierdurch ist das Trocken- und/oder Reinigungstuch mittels des durch die Öffnung hindurchgeführten Arms des Benutzers gehalten und kann somit selbst dann, wenn der Benutzer das Tuch mit der Hand versehentlich nicht mehr greift, nicht herunterfallen.

Hierbei ist zumindest eine Öffnung als Schlitz ausgebildet, der parallel zu der Querkante bzw. Längskante, in deren Bereich er vorgesehen ist, ausgerichtet ist, so dass zum einen ein Hindurchgreifen möglich ist und zum anderen möglichst wenig Material des Trocken- und/oder Reinigungstuchs durch die Öffnung verloren geht.

Dabei ist der Schlitz in einem Abstand von ca. 5 cm bis 15 cm, vorzugsweise 8 cm bis 12 cm, ganz bevorzugt ca. 10 cm, zu der entsprechenden Querkante bzw. Längskante vorgesehen, so dass zum einen die Öffnung für eine gute Handhabung des Trocken- und/oder Reinigungstuchs möglichst nah an der entsprechenden Kante vorgesehen ist und zum anderen für eine ausreichende Stabilität des Trocken- und/oder Reinigungstuchs in dem Bereich zwischen der Öffnung und der entsprechenden Kante ein ausreichender Abstand zur jeweiligen Kante gegeben ist.

Auch hat der Schlitz eine Länge von ca. 5 cm bis 15 cm, vorzugsweise 8 cm bis 12 cm, ganz bevorzugt ca. 10 cm, so dass zum einen ein Hindurchgreifen für übliche Handabmessungen möglich ist und zum anderen möglichst wenig Material des Trocken- und/oder Reinigungstuchs durch die Öffnung verloren geht.

Weiterhin ist der Schlitz in etwa mittig in Bezug auf die Länge der entsprechenden Querkante bzw. Längskante angeordnet, so dass eine gute Handhabung des Trocken- und/oder Reinigungstuchs ermöglicht wird, da beidseits der durch die Öffnung hindurchgeführten Hand des Benutzers ausreichend Material des Trocken- und/oder Reinigungstuchs verbleibt.

Das Trocken- und/oder Reinigungstuch ist quadratisch oder aber rechteckig mit einem Verhältnis Längskante zu Querkante von ca. 1,5 bis 1,7, vorzugsweise 1,6.

Erfindungsgemäß kann zumindest eine Seite des Trocken- und/oder Reinigungstuchs eine Flauschoberfläche haben, vorzugsweise beide Seiten des Trocken- und/oder Reinigungstuchs jeweils eine Flauschoberfläche haben. Hierdurch resultiert ein gutes Gleiten auf der zu bearbeitenden Fläche.

Bei einem bevorzugten Ausführungsbeispiel der Erfindung kann zumindest eine Flauschoberfläche durch ein Frottee, vorzugsweise ein Walk-Frottee, gebildet sein, so dass eine sowohl angenehme als auch gut saugfähige Oberfläche gegeben ist.

Erfindungsgemäß kann der Randbereich mit einer Einfassung aus einem textilen Material umsäumt sein, so dass ein Ausfransen des Trocken- und/oder Reinigungstuchs in den Kantenbereichen vermieden wird und die Einfassung ihrerseits ähnlich weich ist wie das Trocken- und/oder Reinigungstuch und somit nicht zu Beeinträchtigungen oder Beschädigungen der zu bearbeitenden Oberfläche führt. Alternativ oder zusätzlich kann auch eine im geringen Abstand zur Kante positionierte Naht vorgesehen sein. Auch kann die Kante durch Verschweißen gegen Ausfransen gesichert sein. Dabei kann die Kante mittels Laserschneiden erzeugt worden sein, wobei dann das Erstellen der Kante sowie das Verschweißen in einem Arbeitsgang gleichzeitig erfolgt ist. Das Verschweißen der Kante kann dabei unabhängig und ggf. zusätzlich zu einem Verschweißen der Tuchlagen miteinander erfolgt sein.

Auch kann die Öffnung mit einer Einfassung aus einem textilen Material umsäumt sein, so dass ein Ausfransen des Trocken- und/oder Reinigungstuchs im Bereich der Öffnung(en) vermieden wird und die Einfassung ihrerseits ähnlich weich ist wie das Trocken- und/oder Reinigungstuch und somit nicht zu Beeinträchtigungen oder Beschädigungen der zu bearbeitenden Oberfläche führt. AIternativ oder zusätzlich kann auch eine im geringen Abstand zur Kante positionierte Naht vorgesehen sein.

Bei einem bevorzugten Ausführungsbeispiel der Erfindung kann das Trocken- und/oder Reinigungstuch einen doppellagigen Aufbau mit zwei Tuchlagen aufweisen, wobei die beiden Tuchlagen mit einer eventuell vorhandenen Flauschseite nach außen weisend rückseitig aneinandergrenzend vorgesehen sind. Somit kann ein einfaches Material mit nur einer Flauschseite für das Trocken- und/oder Reinigungstuch verwendet werden und es können gleichwohl zwei Flauschseiten an dem Trocken- und/oder Reinigungstuch realisiert werden. Dabei können die beiden Seiten aus identischen Tuchlagen bestehen, es können jedoch auch unterschiedliche Tuchlagen mit voneinander abweichenden Materialeigenschaften für die beiden Seiten des Trocken- und/oder Reinigungstuchs eingesetzt werden.

Dabei können die beiden Tuchlagen auf ihren rückseitigen Flächen an mehreren verteilt angeordneten Stellen miteinander verschweißt sein, vorzugsweise vollflächig miteinander verschweißt sein, so dass das Trocken- und/oder Reinigungstuch dauerhaft flach und tuchförmig bleibt und sich nicht aufblähen kann oder aber eine Verschiebung der beiden Tuchlagen gegeneinander eintreten kann.

Vorteilhafterweise kann zumindest eine Seite des Trocken- und/oder Reinigungstuchs als Mikrofasertuch ausgebildet sein, vorzugsweise können beide Seiten des Trocken- und/oder Reinigungstuchs jeweils als Mikrofasertuch ausgebildet sein, so dass eine besonders hohe Aufnahmefähigkeit in Bezug auf Schmutz, Staub und Feuchtigkeit gegeben ist.

Erfindungsgemäß kann zumindest eine Seite des Trocken- und/oder Reinigungstuchs aus einem Mischgewebe mit Polyester- und Polyamid-Bestandteilen bestehen, vorzugsweise können beide Seiten des Trocken- und/oder Reinigungstuchs jeweils aus einem Mischgewebe mit Polyester- und Polyamid-Bestandteilen bestehen.

Dabei kann das Mischgewebe eine Zusammensetzung mit ca. 80 % Polyester und ca. 20 % Polyamid aufweisen.

Auch kann das Trocken- und/oder Reinigungstuch ein Flächengewicht von ca. 800 g/m² haben.

Im Folgenden werden in den Zeichnungen dargestellte Ausführungsbeispiele der Erfindung erläutert. Es zeigen:
- Fig. 1: ein erstes Ausführungsbeispiel eines erfindungsgemäßen Trocken- und/oder Reinigungstuchs und
- Fig. 2: ein zweites Ausführungsbeispiel eines erfindungsgemäßen Trocken- und/oder Reinigungstuchs.

In allen Figuren werden für gleiche bzw. gleichartige Teile übereinstimmende Bezugszeichen verwendet.

In den Figuren ist jeweils ein Trocken- und/oder Reinigungstuch 1 mit einer viereckigen Fläche mit zwei Seiten (Vorderseite sowie Rückseite) gezeigt. Die beiden Seiten sind jeweils durch zwei Längskanten 2 und zwei Querkanten 3 begrenzt.

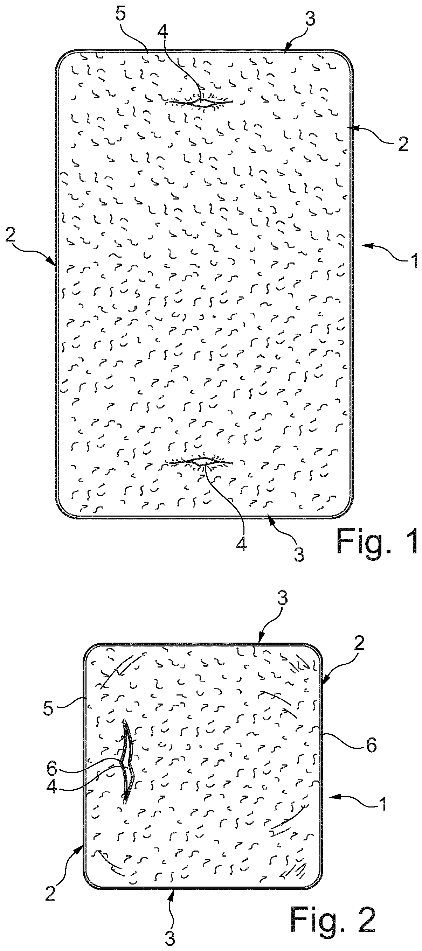

Das in Fig. 1 gezeigte Trocken- und/oder Reinigungstuch 1 ist rechteckig ausgebildet, wobei die Längskanten 2 jeweils 1,6-mal so lang sind wie die Querkanten 3. Die Längskanten 2 können beispielsweise jeweils 80 cm lang sein, wohingegen die Querkanten 3 dann jeweils 50 cm lang sind.

Das rechteckige Trocken- und/oder Reinigungstuch 1 weist im Bereich beider Querkanten 3 jeweils eine Öffnung 4 zum Hindurchgreifen auf, sodass das Trocken- und/oder Reinigungstuch 1 bei der Benutzung mittels des durch die Öffnung 4 hindurchgeführten, in der Zeichnung nicht gezeigten Arms des Benutzers gehalten und gegen ein Herunterfallen gesichert ist.

Die Öffnungen 4 sind jeweils als Schlitz von ca. 10 cm ausgebildet, der parallel zu der Querkante 3, in deren Bereich er vorgesehen ist, ausgerichtet und in Bezug auf die Länge der Querkante 3 in etwa mittig angeordnet ist. Dabei ist die schlitzförmige Öffnung 4 jeweils in einem Abstand von ca. 10 cm, zu der entsprechenden Querkante bzw. Längskante vorgesehen.

Beide Seiten des Trocken- und/oder Reinigungstuchs 1 haben jeweils eine Flauschoberfläche in der Art eines Frottee.

Der Randbereich des Trocken- und/oder Reinigungstuchs 1 ist mit einer Einfassung 5 aus einem textilen Material mit einer Naht 6 umsäumt, wohingegen die Öffnung 4 durch Verschweißen gegen Ausfransen gesichert ist. Dabei kann die Öffnung mittels Laserschneiden erzeugt worden sein, wobei dann das Erstellen der Öffnung sowie das Verschweißen in einem Arbeitsgang gleichzeitig erfolgt sind. Das Verschweißen der Kante ist dabei unabhängig und ggf. zusätzlich zu einem Verschweißen der Tuchlagen miteinander erfolgt.

Das in Fig. 2 gezeigte Trocken- und/oder Reinigungstuch 1 ist in den meisten Punkten mit dem in Fig. 1 gezeigten Gegenstand übereinstimmend. Abweichend von dem Gegenstand in Fig. 1 ist das in Fig. 2 gezeigte Trocken- und/oder Reinigungstuch 1 jedoch quadratisch ausgebildet. Die Kanten 2, 3 können beispielsweise jeweils 40 cm oder 50 cm lang sein.

Das gezeigte Trocken- und/oder Reinigungstuch 1 hat auch nur eine einzige Öffnung 4 zum Hindurchgreifen. Diese ist gleichfalls 10 cm lang und mit 10 cm Abstand zu der angrenzenden Kante vorgesehen. Die Öffnung 4 ist hier durch eine im geringen Abstand zur Kante der Öffnung 4 positionierten Naht 6 gegen Ausfransen gesichert.

## Patentansprüche

1. Trocken- und/oder Reinigungstuch (1) mit einer viereckigen Fläche mit zwei Seiten, die durch zwei Längskanten (2) und zwei Querkanten (3) jeweils begrenzt sind, **dadurch gekennzeichnet, dass** das Trocken- und/oder Reinigungstuch (1) im Bereich von zumindest einer Querkante (3) bzw. einer Längskante (2) eine Öffnung (4) zum Hindurchgreifen aufweist, dass zumindest eine Öffnung (4) als Schlitz ausgebildet ist, der parallel zu der Querkante (3) bzw. Längskante (2), in deren Bereich er vorgesehen ist, ausgerichtet ist, dass der Schlitz in einem Abstand von ca. 5 cm bis 15 cm, vorzugsweise 8 cm bis 12 cm, ganz bevorzugt ca. 10 cm, zu der entsprechenden Querkante (3) bzw. Längskante (2) vorgesehen ist, dass der Schlitz eine Länge von ca. 5 cm bis 15 cm, vorzugsweise 8 cm bis 12 cm, ganz bevorzugt ca. 10 cm, hat, dass der Schlitz in etwa mittig in Bezug auf die Länge der entsprechenden Querkante (3) bzw. Längskante (2) angeordnet ist und dass das Trocken- und/oder Reinigungstuch (1) quadratisch ist oder aber rechteckig ist mit einem Verhältnis Längskante (2) zu Querkante (3) von ca. 1,5 bis 1,7, vorzugsweise 1,6.

2. Trocken- und/oder Reinigungstuch (1) nach dem vorhergehenden Anspruch, **dadurch gekennzeichnet, dass** zumindest eine Seite des Trocken- und/oder Reinigungstuchs (1) eine Flauschoberfläche hat, vorzugsweise beide Seiten des Trocken- und/oder Reinigungstuchs (1) jeweils eine Flauschoberfläche haben.

3. Trocken- und/oder Reinigungstuch (1) nach dem vorhergehenden Anspruch, **dadurch gekennzeichnet, dass** zumindest eine Flauschoberfläche durch ein Frottee, vorzugsweise ein Walk-Frottee, gebildet ist.

4. Trocken- und/oder Reinigungstuch (1) nach einem der vorhergehenden Ansprüche, **dadurch gekennzeichnet, dass** der Randbereich der Längskanten (2) und der Querkanten (3) mit einer Einfassung (5) aus einem textilen Material umsäumt ist und/oder eine im geringen Abstand zur jeweiligen Kante positionierte Naht (6) vorgesehen ist.

5. Trocken- und/oder Reinigungstuch (1) nach einem der vorhergehenden Ansprüche, **dadurch gekennzeichnet, dass** die Öffnung (4) mit einer Einfassung (5) aus einem textilen Material umsäumt ist und/oder eine im geringen Abstand zur jeweiligen Kante positionierte Naht (6) vorgesehen ist.

6. Trocken- und/oder Reinigungstuch (1) nach einem der vorhergehenden Ansprüche, **dadurch gekennzeichnet, dass** das Trocken- und/oder Reinigungstuch (1) einen doppellagigen Aufbau mit zwei Tuchlagen aufweist, wobei die beiden Tuchlagen mit einer eventuell vorhandenen Flauschseite nach au-βen weisend rückseitig aneinandergrenzend vorgesehen sind.

7. Trocken- und/oder Reinigungstuch (1) nach dem vorhergehenden Anspruch, **dadurch gekennzeichnet, dass** die beiden Tuchlagen auf ihren rückseitigen Flächen an mehreren verteilt angeordneten Stellen miteinander verschweißt sind, vorzugsweise vollflächig miteinander verschweißt sind.

8. Trocken- und/oder Reinigungstuch (1) nach einem der vorhergehenden Ansprüche, **dadurch gekennzeichnet, dass** zumindest eine Seite des Trocken- und/oder Reinigungstuchs (1) als Mikrofasertuch ausgebildet ist, vorzugsweise beide Seiten des Trocken- und/oder Reinigungstuchs (1) jeweils als Mikrofasertuch ausgebildet sind.

9. Trocken- und/oder Reinigungstuch (1) nach einem der vorhergehenden Ansprüche, **dadurch gekennzeichnet, dass** zumindest eine Seite des Trocken- und/oder Reinigungstuchs (1) aus einem Mischgewebe mit Polyester- und Polyamid-Bestandteilen besteht, vorzugsweise beide Seiten des Trocken- und/oder Reinigungstuchs (1) jeweils aus einem Mischgewebe mit Polyester- und Polyamid-Bestandteilen bestehen.

10. Trocken- und/oder Reinigungstuch (1) nach dem vorhergehenden Anspruch, **dadurch gekennzeichnet, dass** das Mischgewebe eine Zusammensetzung mit ca. 80 % Polyester und ca. 20 % Polyamid aufweist.

11. Trocken- und/oder Reinigungstuch (1) nach einem der vorhergehenden Ansprüche, **dadurch gekennzeichnet, dass** das Trocken- und/oder Reinigungstuch (1) ein Flächengewicht von ca. 800 g/m² hat.

## Claims

1. Drying and/or cleaning cloth (1), with a quadrilateral surface with two sides, which in each case are delimited by two longitudinal edges (2) and two transverse edges (3), **characterised in that** the drying and/or cleaning cloth (1) has an opening (4) for reaching through in the region of at least one transverse edge (3) or a longitudinal edge (2) respectively, that at least one opening (4) is configured as a slot, which is aligned parallel to the transverse edge (3) or longitudinal edge (2) respectively in the region of which it is provided, that the slot is provided at a distance interval of approximately 5 cm to 15 cm, preferably 8 cm to 12 cm, and particularly preferably approximately 10 cm, from the corresponding transverse edge (3) or longitudinal edge (2) respectively, that the slot has a length of approximately 5 cm to 15 cm, preferably 8 cm to 12 cm, and particularly preferably approximately 10 cm, that the slot is arranged approximately in the middle in relation to the length of the corresponding transverse edge (3) or longitudinal edge (2) respectively, and that the drying and/or cleaning cloth (1) is quadratic or quadrilateral, with a ratio of the longitudinal edge (2) to the transverse edge (3) of approximately 1.5 to 1.7, preferably 1,6.

2. Drying and/or cleaning cloth (1) according to the preceding claim, **characterised in that** at least one side of the drying and/or cleaning cloth (1) has one fluffy surface, and preferably both sides of the drying and/or cleaning cloth (1) each have a fluffy surface.

3. Drying and/or cleaning cloth (1) according to the preceding claim, **characterised in that** at least one fluffy surface is formed by a terrycloth, preferably a milled terrycloth.

4. Drying and/or cleaning cloth (1) according to any one of the preceding claims, **characterised in that** the edge region of the longitudinal edges (2) and the transverse edges (3) are seamed around with an edging (5) made of a textile material, and/or is provided with a seam (6) positioned at a short distance interval from the respective edge.

5. Drying and/or cleaning cloth (1) according to any one of the preceding claims, **characterised in that** the opening (4) is seamed around with an edging (5) of a textile material and/or a seam (6) is provided, positioned at a short distance interval from the respective edge.

6. Drying and/or cleaning cloth (1) according to any one of the preceding claims, **characterised in that** the drying and/or cleaning cloth (1) comprises a double-layer structure with two fabric layers, wherein the two fabric layers, with a possible fluffy side, are provided adjacent to one another with the rear sides facing outwards.

7. Drying and/or cleaning cloth (1) according to any one of the preceding claims, **characterised in that** the two fabric layers are welded to one another on their rear side surfaces at several locations arranged divided from one another.

8. Drying and/or cleaning cloth (1) according to any one of the preceding claims, **characterised in that** at least one side of the drying and/or cleaning cloth (1) is formed as a microfibre fabric, and preferably both sides of the drying and/or cleaning cloth (1) are each formed as microfibre fabrics.

9. Drying and/or cleaning cloth (1) according to any one of the preceding claims, **characterised in that** at least one side of the cleaning and/or drying cloth (1) consists of a mixed fabric with polyester and polyamide constituents, and preferably both sides of the drying and/or cleaning cloth (1) each consist of a mixed fabric with polyester and polyamide constituents.

10. Drying and/or cleaning cloth (1) according to the preceding claim, **characterised in that** the mixed fabric comprises a composition with approximately 80% polyester and approximately 20 % polyamide.

11. Drying and/or cleaning cloth (1) according to any one of the preceding claims, **characterised in that** the drying and/or cleaning cloth (1) has a mass per unit area of approximately 800 g/m².

## Revendications

1. Chiffon (1) de séchage et/ou de nettoyage, muni d'une surface quadrangulaire comprenant deux côtés respectivement délimités par deux arêtes longitudinales (2) et par deux arêtes transversales (3), **caractérisé par le fait que** ledit chiffon (1) de séchage et/ou de nettoyage comporte un orifice respectif de préhension (4), au moins dans la région d'une arête transversale (3) ou d'une arête longitudinale (2) ; **par le fait qu'**au moins un orifice (4) est réalisé sous la forme d'une fente orientée parallèlement à l'arête transversale (3), respectivement à l'arête longitudinale (2) dans la région de laquelle elle est prévue ; **par le fait que** ladite fente est prévue à une distance d'environ 5 cm à 15 cm, préférentiellement de 8 cm à 12 cm, d'environ 10 cm avec préférence majeure, vis-à-vis de l'arête correspondante respectivement transversale (3) ou longitudinale (2) ; **par le fait que** ladite fente présente une longueur d'environ 5 cm à 15 cm, préférentiellement de 8 cm à 12 cm, d'environ 10 cm avec préférence majeure ; **par le fait que** ladite fente occupe un emplacement approximativement central par rapport à la longueur de ladite arête correspondante, respectivement transversale (3) ou longitudinale (2) ; et **par le fait que** ledit chiffon (1) de séchage et/ou de nettoyage est carré, voire rectangulaire, avec un rapport arête longitudinale (2)/arête transversale (3) d'environ 1,5 à 1,7, préférentiellement de 1,6.

2. Chiffon (1) de séchage et/ou de nettoyage selon la revendication précédente, **caractérisé par le fait qu'**au moins un côté dudit chiffon (1) de séchage et/ou de nettoyage est doté d'une surface duveteuse, les deux côtés dudit chiffon (1) de séchage et/ou de nettoyage étant, de préférence, respectivement pourvus d'une surface duveteuse.

3. Chiffon (1) de séchage et/ou de nettoyage selon la revendication précédente, **caractérisé par le fait qu'**au moins une surface duveteuse est constituée d'un tissu-éponge, préférentiellement d'un tissu-éponge foulé.

4. Chiffon (1) de séchage et/ou de nettoyage selon l'une des revendications précédentes, **caractérisé par le fait que** la région marginale des arêtes longitudinales (2) et des arêtes transversales (3) est bordée par une lisière (5) en un matériau textile, et/ou une couture (6) est prévue avec positionnement à une faible distance vis-à-vis de l'arête considérée.

5. Chiffon (1) de séchage et/ou de nettoyage selon l'une des revendications précédentes, **caractérisé par le fait que** l'orifice (4) est bordé par une lisière (5) en un matériau textile, et/ou une couture (6) est prévue avec positionnement à une faible distance vis-à-vis de l'arête considérée.

6. Chiffon (1) de séchage et/ou de nettoyage selon l'une des revendications précédentes, **caractérisé par le fait que** ledit chiffon (1) de séchage et/ou de nettoyage présente une structure à double stratification comprenant deux couches d'étoffe, lesquelles deux couches d'étoffe sont prévues avec disposition contiguë par leurs faces postérieures, un côté duveteux, éventuellement présent, étant tourné vers l'extérieur.

7. Chiffon (1) de séchage et/ou de nettoyage selon la revendication précédente, **caractérisé par le fait que** les deux couches d'étoffe sont soudées l'une à l'autre sur leurs surfaces postérieures, en plusieurs zones agencées avec répartition, de préférence soudées l'une à l'autre par toute leur superficie.

8. Chiffon (1) de séchage et/ou de nettoyage selon l'une des revendications précédentes, **caractérisé par le fait qu'**au moins un côté dudit chiffon (1) de séchage et/ou de nettoyage est réalisé sous la forme d'un tissu microfibre, les deux côtés dudit chiffon (1) de séchage et/ou de nettoyage étant, de préférence, respectivement réalisés sous la forme d'un tissu microfibre.

9. Chiffon (1) de séchage et/ou de nettoyage selon l'une des revendications précédentes, **caractérisé par le fait qu'**au moins un côté dudit chiffon (1) de séchage et/ou de nettoyage est constitué d'un tissu mélangé à composants de polyester et de polyamide, les deux côtés dudit chiffon (1) de séchage et/ou de nettoyage étant, de préférence, respectivement constitués d'un tissu mélangé à composants de polyester et de polyamide.

10. Chiffon (1) de séchage et/ou de nettoyage selon la revendication précédente, **caractérisé par le fait que** le tissu mélangé présente une composition renfermant environ 80 % de polyester et environ 20 % de polyamide.

11. Chiffon (1) de séchage et/ou de nettoyage selon l'une des revendications précédentes, **caractérisé par le fait que** ledit chiffon (1) de séchage et/ou de nettoyage présente une masse surfacique d'environ 800 g/m².
